## Europäisches Patentamt
## European Patent Office
## Office européen des brevets

(11) Veröffentlichungsnummer: **0 258 744 B1**

# EUROPÄISCHE PATENTSCHRIFT

(45) Veröffentlichungstag der Patentschrift: **14.08.91**

(51) Int. Cl.⁵: **B01D 53/34**, B01D 53/36, C01B 17/775, C01B 17/74

(21) Anmeldenummer: **87112070.5**

(22) Anmeldetag: **20.08.87**

(54) **Verfahren zur Reinigung und Wiederaufheizung von Abgasen.**

(30) Priorität: **02.09.86 DE 3629766**

(43) Veröffentlichungstag der Anmeldung:
**09.03.88 Patentblatt 88/10**

(45) Bekanntmachung des Hinweises auf die Patenterteilung:
**14.08.91 Patentblatt 91/33**

(84) Benannte Vertragsstaaten:
**AT BE DE FR GB IT NL**

(56) Entgegenhaltungen:
EP-A- 0 177 806        DE-B- 1 135 868
DE-C- 670 966          FR-A- 2 238 669
GB-A- 744 465          US-A- 3 519 388

(73) Patentinhaber: **BAYER AG**

**W-5090 Leverkusen 1 Bayerwerk(DE)**

(72) Erfinder: **Lailach, Günter, Dr.**
**Bodelschwinghstrasse 23**
**W-4150 Krefeld(DE)**
Erfinder: **Gerken, Rudolf, Dr.**
**Ratherstrasse 79**
**W-4150 Krefeld(DE)**

## Beschreibung

Die vorliegende Erfindung betrifft ein Verfahren zur Entfernung von Staub und Schwefeldioxid aus Halogenwasserstoff-armen heißen Abgasen und Wiederaufheizung der gereinigten Abgase.

Aus der EP-A-177 806 ist ein vorteilhaftes Verfahren zur Entschwefelung Halogenwasserstoff-haltiger Abgase bekannt, bei dem als Reaktionsprodukt wirtschaftlich verwendbare Schwefelsäure anfällt. Einer vielseitigen Verwendung dieser Schwefelsäure stehen allerdings die aus dem abgeschiedenen Staub als Sulfate gelösten Schwermetalle entgegen, durch die die produzierte Schwefelsäure in geringem Maße verunreinigt wird. Bei Abgasen aus Ölfeuerungen wird dieses Problem wegen des hohen Vanadin- und Nickelgehaltes der Asche gravierend.

Die Aufgabe der vorliegenden Erfindung ist, ein einfaches wirtschaftliches Verfahren zur Verfügung zu stellen, bei dem als Zwangsanfallprodukt reine, vielseitig verwendbare Schwefelsäure anfällt.

Diese Aufgabe wird gelöst durch das nachfolgend beschriebene Verfahren. Gegenstand der Erfindung ist somit ein Verfahren zur Entfernung von Staub und Schwefeldioxid aus halogenwasserstoffarmen 170 bis 500° C heißen Abgasen durch Wäsche mit Schwefelsäure und Oxidation des Schwefeldioxids unter Bildung von verdünnter Schwefelsäure, die im Prozeß zu höherer Konzentration eingedampft wird, und Wiederaufheizung der gereinigten Abgase, welches dadurch gekennzeichnet ist, daß

a) die Abgase in einer Wäsche mit im Kreislauf geführter Schwefelsäure staubfrei gewaschen und auf Temperaturen unterhalb 135° C abgekühlt werden,

b) anschließend aus den Abgasen Feststoffe und gelöste Metallsulfate enthaltende Schwefelsäure abgeschieden werden,

c) die staubfreien, von Feststoffe und gelöste Metallsulfate enthaltenden Schwefelsäuretropfen befreiten Abgase in einer Wäsche mit 15- bis 50%iger, reiner Schwefelsäure auf Temperaturen von 50 bis 70° C abgekühlt werden,

d) in den Abgasen enthaltenes Schwefeldioxid in der Wäsche der Stufe c) oder in einer nachgeschalteten Stufe zu reiner, verdünnter Schwefelsäure umgesetzt wird, wobei die in der nachgeschalteten Stufe gebildete Schwefelsäure der Wäsche der Stufe c) zugeführt wird,

e) die entstaubten und von Schwefeldioxid befreiten Abgase in einer Wäsche mittels heißer in Kreislauf geführter 50- bis 65%iger heißer Schwefelsäure unter gleichzeitiger Konzentrierung der aus der Wäsche der Stufe c) abgezogenen und in diesen Kreislauf eingespeisten reinen 15- bis 50%igen Schwefelsäure auf 70 bis 90° C wiederaufgeheizt werden

f) die feststoffhaltige Schwefelsäure aus dem Kreislauf der Stufe a) in indirekten Wärmetauschern mittels der reinen, 50- bis 65%igen Schwefelsäure aus dem Kreislauf der Stufe e) gekühlt wird, wobei die zwei Schwefelsäurekreisläufe der Stufen a) und e) nicht miteinander verbunden sind und reine Schwefelsäure aus dem Kreislauf der Stufe e) ausgespeist wird.

Die Kühlung der Abgase in der Abgaswäsche erfolgt bevorzugt dadurch, daß die im Verfahrensschritt a) durchgeführte Wäsche der Abgase mit 70- bis 80 %iger, Feststoffe und Metallsulfate enthaltender Schwefelsäure erfolgt. Vorzugsweise wird die Abkühlung der Abgase im Verfahrensschritt a) auf Temperaturen im Bereich von 100 bis 130° C vorgenommen.

Für die Ausführung der einzelnen Verfahrensstufen sind nach dem Stand der Technik verschiedene Möglichkeiten gegeben. Für die Wäsche der staubhaltigen Gase werden Venturi-Wäscher, Strahlwäscher oder Waschtürme mit Düsenrosten bevorzugt, weil diese keine Probleme durch Ablagerung von Feststoffen verursachen.

Die Abscheidung der Tropfen gemäß dem Verfahrensschritt b) geschieht bevorzugt in Tropfenabscheidern (7), insbesondere Lamellenabscheidern. Sehr gute Resultate werden dabei mit Lamellenabscheidern aus Polyvinylidenfluorid erzielt. Die abgeschiedene verunreinigte Schwefelsäure wird vorzugsweise in die Wäsche gemäß a) zurückgeleitet.

Eine besonders bevorzugte Ausführungsform des erfindungsgemäßen Verfahrens besteht darin, daß die im Verfahrensschritt a) abgeschiedenen Feststoffe aus einem Teilstrom der Schwefelsäure abgetrennt werden, der durchschnittlich 0,2 bis 10 %, vorzugsweise 1 bis 5 %, des Kreislaufvolumenstromes dieser Gaswäsche entspricht.

Das erfindungsgemäße Verfahren ermöglicht die Reinigung und Wiederaufheizung von Rauchgasen unter Erzeugung von vielseitig verwendbarer reiner Schwefelsäure bei minimalem Apparate- und Energieaufwand.

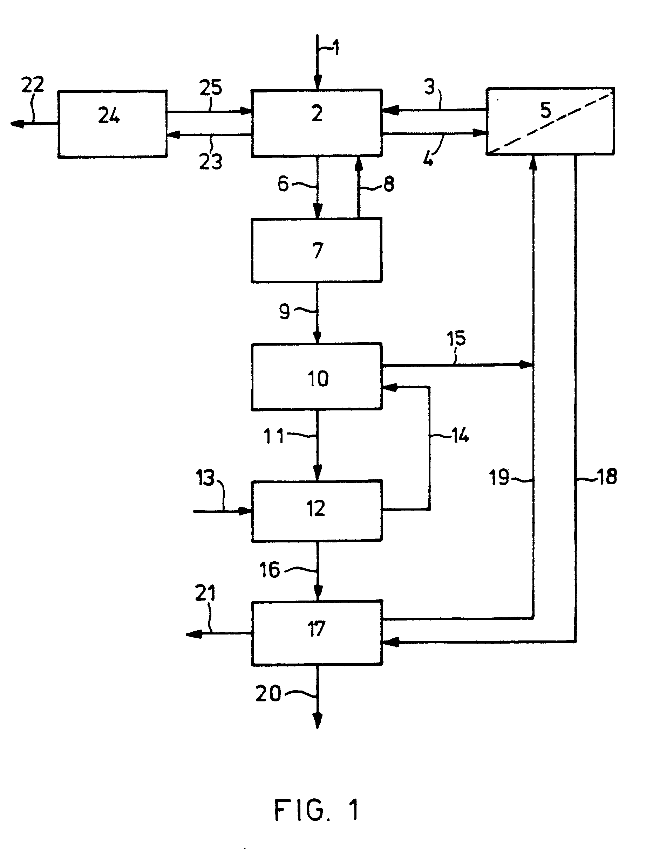

Anhand der Fig. 1 wird das erfindungsgemäße Verfahren für den Fall, daß eine katalytische SO$_2$-Oxidation als Entschwefelungsverfahren angewendet wird, näher erläutert.

Staubhaltiges Rauchgas (1) mit einer Temperatur von 140 bis 200° C wird im Wäscher (2) mittels 70 bis 80 %iger, feststoffhaltiger Schwefelsäure (3) staubfrei gewaschen und auf 100 bis 135° C abgekühlt. Die aus dem Wäscher (2) abfließende Schwefelsäure (4) wird im Wärmetauscher (5) um 5 bis 30 K abgekühlt, bevor sie wieder in den Wäscher (2) eingespeist wird.

Aus dem gekühlten Rauchgas (6) werden Tropfen der Feststoffe und Metallsulfate enthaltenden 70 bis 80 %igen Schwefelsäure mit einem Tropfenabscheider (7) abgetrennt und in die Wäsche (2) zurückgeleitet (8).

Das feststofffreie, 100 bis 135 °C heiße Rauchgas (9) wird in einem zweiten Wäscher (10) mittels im Kreislauf geförderter 15 bis 50 %iger Schwefelsäure auf 50 bis 70 °C abgekühlt. Das abgekühlte, weitgehend Wasserdampfgesättigte Rauchgas (11) wird in einen Reaktor (12) geleitet, in dem das Schwefeldioxid an feuchter Aktivkohle zu Schwefelsäure umgesetzt wird.

Eine besonders bevorzugte Ausführungsform des erfindungsgemäßen Verfahrens besteht somit darin, daß die Bildung von Schwefelsäure gemäß dem Teilschritt d) durch katalytische Umsetzung an feuchter Aktivkohle erfolgt.

Es kann aber ebenso vorteilhaft sein, die Bildung der Schwefelsäure durch Zugabe von $H_2O_2$ und/oder Peroxyschwefelsäuren zur Wäsche gemäß Teilschritt c) erfolgen zu lassen.

Die an der Aktivkohle gebildete Schwefelsäure wird durch Besprühen der Kohle mit Wasser (13) als 2 bis 20 %ige Schwefelsäure (14) ausgewaschen und in den Wäscher (10) eingespeist. Im Kontakt mit dem Rauchgas (9) erfolgt eine Konzentrierung der Schwefelsäure auf 15 bis 50 % $H_2SO_4$-Gehalt, je nach Menge und Konzentration der eingespeisten Schwefelsäure (14). Die der eingespeisten Säure (14) entsprechende Menge 15 bis 50 %iger Schwefelsäure (15) wird aus dem Wäscher (10) in das Schwefelsäurekreislaufsystem des der Wiederaufheizung des Rauchgases dienenden Wäschers (17) eingespeist. Im Wäscher (17) erfolgt eine Wiederaufheizung des entschwefelten Rauchgases (16) von 50 bis 60 °C auf 70 bis 90 °C durch Kontakt des Rauchgases mit 50 bis 65 %iger Schwefelsäure (18). Die aus dem Wäscher (17) abfließende, im Kreislauf geförderte 50 bis 65 %ige Schwefelsäure (19) wird im Wärmetauscher (5) um 5 bis 30 K erwärmt und im Wäscher (17) um 5 bis 30 K abgekühlt. Dabei dient die abgegebene Wärmeenergie sowohl der Wiederaufheizung des Rauchgases (16) auf 70 bis 90 °C (20) als auch der Wasserverdampfung aus der in den Kreislauf eingespeisten 15 bis 50 %igen Schwefelsäure (15). Als Zwangsanfallprodukt wird aus dem System reine 50 bis 65 %ige Schwefelsäure (21) ausgespeist. Diese Säure kann im Bedarfsfall in Vakuumverdampfern, wie Vakuumumlaufverdampfern, auf Konzentrationen von 60 bis 93 % eingedampft werden.

Die in der Wäsche (2) aus dem Rauchgas (1) abgeschiedenen Feststoffe (22) werden aus einem Teilstrom (23) der feststoffhaltigen Schwefelsäure abgetrennt (24). Die feststoffarme oder -freie Schwefelsäure (25) wird in die Wäsche (2) zurückgeleitet.

Bei Abgastemperaturen im Bereich von 200 bis 500 °C kann überschüssige Wärmeenergie durch die zusätzliche Kühlung der im Kreislauf geförderten 70 bis 80 %igen Schwefelsäure (3) mit einem systemfremden Kühlmittel nach der teilweisen Kühlung im Wärmetauscher (5) abgeführt werden.

Es liegt durchaus im Rahmen des erfindungsgemäßen Verfahrens, eine stärkere Aufheizung des gereinigten Rauchgases und weitergehende Konzentrierung der gebildeten Schwefelsäure dadurch zu bewirken, daß der im Wärmetauscher (5) aufgeheizte Schwefelsäurestrom (18) in einem weiteren Wärmetauscher mittels systemfremder Wärmeenergie weiter aufgeheizt wird, bevor er in den Wäscher (17) eingespeist wird.

Außerdem ist es im Sinne der Erfindung möglich, mit geringem Aufwand an Fremdenergie eine starke Konzentrierung der Schwefelsäure (21) zu erreichen, indem mit dem zusätzlich aufgeheizten Säurestrom (18) nur ein Teil des Rauchgases (16) auf eine hohe Temperatur aufgeheizt und anschließend mit dem nicht aufgeheizten Teilstrom des Rauchgases (16) gemischt wird.

Die Vorteile des erfindungsgemäßen Verfahrens sollen anhand des folgenden Beispieles verdeutlicht werden, ohne daß hierbei eine Einschränkung der Erfindung zu sehen ist.

Beispiel

100.000 $m^3_n$/h (feucht) aus einer Ölfeuerung sollen entstaubt und entschwefelt werden. Das Rauchgas (1) enthält 4,5 Vol-% $O_2$, 10 Vol-% $H_2O$-Dampf, 4.250 mg $SO_2/m^3_n$ (tr.) und 150 mg Staub/$m^3_n$ (tr.). Die Temperatur beträgt 180 °C.

Das Rauchgas (1) wird in einem Wäscher (2) mit 76 %iger Schwefelsäure, die 0,5 Gew.-% Feststoffe enthält, gewaschen. In den Wäscher (2) werden 160 $m^3$/h Schwefelsäure (3) mit einer Temperatur von 104 °C eingespeist. Die mit 120 °C aus dem Wäscher (2) abgezogene Schwefelsäure (4) wird im Wärmetauscher (5) auf 104 °C abgekühlt. Das aus dem Wäscher (2) mit einer Temperatur von 120 °C austretende Rauchgas (6) wird durch einen Tropfenabscheider (7) geleitet. Die dort abgeschiedene feststoffhaltige Schwefelsäure (8) fließt in den Wäscher (2) ab.

Das feststofffreie, 120 °C heiße Rauchgas (9) wird im Wäscher (10) mit reiner 23,9 %iger Schwefelsäure gewaschen. Dabei erfolgt eine Abkühlung des Rauchgases auf 60 °C. Mit 13,7 Vol-% Feuchte wird das Rauchgas (11) aus dem Wäscher (10) in den Entschwefelungsreaktor (12) geleitet. Hier wird das Schwefeldioxid an feuchter Aktivkohle zu Schwefelsäure umgesetzt. Um die gebildete Schwefelsäure aus der Aktivkohle auszuwaschen, wird diese mit 5,8 t/h Wasser (13) besprüht. Aus dem Reaktor fließen 5,855 t/h 10 %ige Schwefelsäure (14) aus, die in den Wäscher (10) eingespeist werden.

Das aus dem Reaktor (12) austretende Rauchgas (16) hat eine Temperatur von 52,5° C, enthält 14 Vol-% Feuchte und 370 mg $SO_2/m^3_n$ (tr.). Es wird in den Wäscher (17) eingeleitet. In diesen Wäscher werden 162 m³/h reine 56,65 %ige Schwefelsäure mit einer Temperatur von 100° C eingespeist. Im Kontakt mit dem Rauchgas erfolgt im Wäscher (17) eine Konzentrierung der Schwefelsäure auf 57 %. Aus dem Wäscher werden 160,2 m³/h 57 %ige Schwefelsäure mit einer Temperatur von 85° C abgezogen. In diesen Säurestrom (19) werden zusätzlich 2,45 t/h 23,9 %iger Schwefelsäure (15) aus dem Wäscher (10) eingespeist, die dort bei der Eindampfung der aus dem Entschwefelungsreaktor (12) ausgespeisten 10 %igen Schwefelsäure anfallen. Die beim Mischen der Säureströme (19) und (15) resultierende 56,65 %ige Schwefelsäure wird im Wärmetauscher (5) wieder auf 100° C aufgeheizt. Als Zwangsanfallprodukt der Entschwefelung werden aus dem Wäscher (17) 1,03 t/h reine 57 %ige Schwefelsäure (21) ausgespeist. Das wiederaufgeheizte Rauchgas (20) hat eine Temperatur von 85° C und enthält 370 mg $SO_2/m^3_n$ (tr.) sowie 15,5 Vol-% Feuchte.

Zur Aufrechterhaltung eines akzeptablen Feststoffgehaltes in der Kreislaufschwefelsäure des Wäschers (2) werden 2,7 t/h der 0,5 Gew.-% Feststoffe enthaltenden Schwefelsäure (23) filtriert (24). Das Filtrat (25) fließt in den Wäscher (2) zurück. Aus dem Filter (24) werden 13,5 kg/h Feststoffe (22) ausgetragen.

**Patentansprüche**

1. Verfahren zur Entfernung von Staub und Schwefeldioxid aus halogenwasserstoffarmen 170 - 500° C heißen Abgasen (1) durch Wäsche mit Schwefelsäure und Oxidation des Schwefelsdioxids unter Bildung von verdünnter Schwefelsäure, die im Prozeß zu höherer Konzentration eingedampft wird, und Wiederaufheizung der gereinigten Abgase (16), dadurch gekennzeichnet, daß

a) die Abgase in einer Wäsche (2) mit un Kreislauf geführter Schwefelsäure (3,4) staubfrei gewaschen und auf Temperaturen unterhalb 135° C abgekühlt werden,

b) anschließend aus den Abgasen (6) Feststoffe und gelöste Metallsulfate enthaltende Schwefelsäuretropfen abgeschieden werden,

c) die staubfreien, von Feststoffe und gelöste Metallsulfate enthaltenden Schwefelsäuretropfen befreiten Abgase (9) in einer Wäsche (10) mit 15- bis 50%iger, reiner Schwefelsäure auf Temperaturen von 50 bis 70° C abgekühlt werden,

d) in den Abgasen enthaltenes des Schwefeldioxid in Wäsche (10) der Stufe c) oder in einer nachgeschalteten Stufe (12) oxidierend zu reiner, verdünnter Schwefelsäure umgesetzt wird, wobei die in der nachgeschalteten Stufe gebildete Schwefelsäure (14) der Wäsche (10) der Stufe c) zugeführt wird,

e) die entstaubten und von Schwefeldioxid befreiten Abgase (16) in einer Wäsche (17) mittels heißer, in Kreislauf geführter, 50- bis 65%iger reiner Schwefelsäure (18) unter gleichzeitiger Konzentrierung der aus der Wäsche (10) der Stufe c) abgezogenen und in diesen Kreislauf eingespeisten reinen 15- bis 50%igen Schwefelsäure (15) auf 70 bis 90° wieder aufgeheizt werden

f) die feststoffhaltige Schwefelsäure (3,4) aus dem Kreislauf der Stufe a) in indirekten Wärmetauschern (5) mittels der reinen 50- bis 65%igen Schwefelsäure (19) aus dem Kreislauf der Stufe e) gekühlt wird, wobei die zwei Schwefelsäurekreisläufe der Stufen a) und e) nicht miteinander verbunden sind und reine Schwefelsäure (21) aus dem Kreislauf der Stufe e) ausgespeist wird.

2. Verfahren gemäß Anspruch 1, dadurch gekennzeichnet, daß die Wäsche der Abgase in Stufe a) mit 70- bis 80%iger, Feststoffe und Metallsuefate enthaltender Schwefelsäure (3,4) erfolgt.

3. Verfahren gemäß einem der Ansprüche 1 und 2, dadurch gekennzeichnet, daß die Abscheidung in Stufe b) in Tropfenabscheidern (7) vorgenommen wird.

4. Verfahren gemäß Anspruch 3, dadurch gekennzeichnet, daß die Tropfenabscheider (7) Lamellenabscheider sind.

5. Verfahren gemäß Anspruch 4, dadurch gekennzeichnet, daß die Lamellenabscheider aus Polyvinylidenfluorid bestehen.

6. Verfahren gemäß einem oder mehrerer der Ansprüche 1 bis 5, dadurch gekennzeichnet, daß die in Stufe a) abgeschiedenen Feststoffe (22) aus einem Teilstrom (23) der Schwefelsäure abgetrennt werden, der durchschnittlich 0,2 bis 10 %, vorzugsweise 1 bis 5 % des Kreislaufvolumenstromes dieser Gaswäsche (2) entspricht.

7. Verfahren gemäß einem oder mehrerer der Ansprüche 1 bis 6, dadurch gekennzeichnet, daß die Bildung von Schwefelsäure gemäß Stufe d) durch Zugabe von $H_2O_2$ und/oder

Peroxyschwefelsäuren zur Wäsche (10) Stufe gemäß Stufe c) erfolgt.

8. Verfahren gemäß einem oder mehrerer der Ansprüche 1 bis 6, dadurch gekennzeichnet, daß die Bildung von Schwefelsäure gemäß Stufe d) durch katalytische Umsetzung an feuchter Aktivkohle in einem Entschwefelungssystem (12) erfolgt, wobei die gebildete Schwefelsäure als 2- bis 20%ige Lösung (14) mit Wasser ausgewaschen und in die Wäsche (10) gemäß Stufe c) geleitet wird.

## Claims

1. A method for removing dust and sulphur dioxide from exhaust gases (1) which are low in hydrogen halide and have a temperature of 170 - 500°C by washing with sulphuric acid and oxidation of the sulphur dioxide, thereby forming diluted sulphuric acid, which is evaporated during the process to form a higher concentration, and the reheating of the cleaned exhaust gases (16), characterised in that

a) the exhaust gases are washed free of dust in a wash (2) using circulated sulphuric acid (3, 4) and are cooled to temperatures below 135°C,

b) sulphuric acid droplets containing solids and dissolved metallic sulphates are then separated from the exhaust gases (6),

c) the dust-free exhaust gases (9) freed of sulphuric acid droplets containing solids and dissolved metallic sulphates are cooled in a wash (10) with 15 to 50% pure sulphuric acid to temperatures of between 50 and 70°C,

d) sulphur dioxide contained in the exhaust gases is converted by oxidation in the wash (10) of stage c) or in a subsequent stage (12) to pure, diluted sulphuric acid, the sulphuric acid (14) formed in the subsequent stage being supplied to the wash (10) of stage c),

e) the exhaust gases (16) freed of dust and sulphur dioxide are reheated to between 70 and 90° in a wash (17) by means of hot, circulated, 50 to 65% pure sulphuric acid (18) with the simultaneous concentration of the pure 15 to 50% sulphuric acid (15), which is drawn from the wash (10) of stage c) and fed into said circuit,

f) the sulphuric acid (3, 4) from the circuit of stage a) containing solids is cooled in indirect heat exchangers (5) by means of the pure 50 to 65% sulphuric acid (19) from the circuit of stage e), the two sulphuric acid circuits of stages a) and e) not being connected with one another and pure sulphuric acid (21) being extracted from stage e).

2. A method according to claim 1, characterised in that the washing of the exhaust gases in stage a) is effected using 70 to 80% sulphuric acid (3, 4) containing solids and metallic sulphates.

3. A method according to one of claims 1 and 2, characterised in that the separation in stage b) is carried out in droplet separators (7).

4. A method according to claim 3, characterised in that the droplet separators (7) are lamellar separators.

5. A method according to claim 4, characterised in that the lamellar separators are made of polyvinylidene fluoride.

6. A method according to one or more of claims 1 to 5, characterised in that the solids (22) separated in stage a) are removed from a partial flow (23) of the sulphuric acid, which corresponds on average to 0.2 to 10%, preferably 1 to 5% of the circulated volume flow of this gas wash (2).

7. A method according to one or more of claims 1 to 6, characterised in that the formation of sulphuric acid according to stage d) is effected by the addition of $H_2O_2$ and/or peroxysulphuric acids to the wash (10) according to stage c).

8. A method according to one or more of claims 1 to 6, characterised in that the formation of sulphuric acid according to stage d) is effected by the catalytic conversion on moist activated carbon in a desulphurisation system (12), the sulphuric acid formed being washed out as a 2 to 20% solution (14) with water and conveyed into the wash (10) according to stage c).

## Revendications

1. Procédé de séparation de poussières et de dioxyde de soufre de fumées (1) pauvres en halogènures d'hydrogène à une température de 170 - 500°C par lavage au moyen d'acide sulfurique et oxydation du dioxyde de soufre, avec formation d'acide sulfurique dilué, qui est en cours de procédé porté par évaporation à une concentration plus élevée, et avec réchauffage des fumées (6) épurées, caractérisé en ce que

a) les fumées sont dépoussiérées par lavage dans un lavage (2) au moyen d'acide sulfurique (3,4) injecté dans le circuit, et refroidies jusqu'à des températures inférieures à 135°C,

b) les gouttes d'acide sulfurique contenant des solides et des sulfates métalliques sont ensuite séparées des fumées (6),

c) les fumées (9) dépoussiérées et débarrassées des gouttes d'acide contenant des solides et des sulfates métalliques sont refroidies jusqu'à des températures de 50 à 70°C dans un bain de lavage (10) au moyen d'acide sulfurique pur à une concentration de 15 à 50%,

d) le dioxyde de soufre contenu dans les fumées est transformé par oxydation en acide sulfurique pur dilué au cours du lavage (10) de l'étape c) ou au cours d'une étape ultérieure (12), tandis que l'acide sulfurique (14) produit au cours de cette étape ultérieure est conduit vers le lavage (10) de l'étape c),

e) les fumées (16) dépoussiérées et débarrassées du dioxyde de soufre sont réchauffées jusqu'à une température de 70 à 90°C dans un lavage (17) au moyen d'acide sulfurique (18) chaud, pur à une concentration de 50 à 65 %, injecté dans le circuit, avec concentration simultanée de l'acide sulfurique (15), pur, à une concentration de 15 à 50 % extrait du lavage (10) de l'étape c) et réintroduit dans ce circuit

f) l'acide sulfurique (3,4) contenant des solides et provenant du circuit de l'étape a) est refroidi dans des échangeurs de chaleur (5) indirects au moyen de l'acide sulfurique (19) pur à une concentration de 50 à 65 % provenant du circuit de l'étape e), tandis que les deux circuits d'acide sulfurique des étapes a) et e) ne sont pas en communication l'un avec l'autre, et que l'acide sulfurique (21) pur du circuit de l'étape e) est extrait.

2. Procédé selon la revendication 1, caractérisé en ce que le lavage des fumées au cours de l'étape a) s'effectue au moyen d'acide sulfurique (3,4) à une concentration de 70 à 80 %, contenant des solides et des sulfates métalliques.

3. Procédé selon l'une des revendications 1 ou 2, caractérisé en ce qu'au cours de l'étape b) la séparation est effectuée dans des séparateurs de gouttes (7).

4. Procédé selon la revendication 3, caractérisé en ce que les séparateurs de gouttes (7) sont des séparateurs à lamelles.

5. Procédé selon la revendication 4, caractérisé en ce que les séparateurs à lamelles sont construits en fluorure de polyvinylidène.

6. Procédé selon l'une quelconque ou plusieurs des revendications 1 à 5, caractérisé en ce que les solides (22) séparés au cours de l'étape a) sont séparés d'un flux partiel (23) de l'acide sulfurique, qui s'élève en moyenne à 0,2 à 10 %, de préférence 1 à 5 % du débit volumique du circuit de ce bain (2) de lavage des gaz.

7. Procédé selon l'une quelconque des revendications 1 à 6, caractérisé en ce que la formation d'acide sulfurique selon l'étape d) s'effectue par addition d'$H_2O_2$ et/ou d'acides peroxysulfuriques au lavage (10) selon l'étape c).

8. Procédé selon l'une quelconque ou plusieurs des revendications 1 à 6, caractérisé en ce que la formation d'acide sulfurique selon l'étape d) s'effectue par réaction catalytique sur charbon actif humide dans un dispositif de désulfuration (12), tandis que l'acide sulfurique formè est extrait par lavage à l'eau sous forme d'une solution à une concentration de 2 à 20 % et est conduit dans le lavage (10) selon l'étape c).

FIG. 1